# EUROPEAN PATENT SPECIFICATION

(11) **EP 3 268 398 B1**
(45) Date of publication and mention of the grant of the patent: **15.05.2019**
(21) Application number: 16709346.7
(22) Date of filing: 08.03.2016
(51) Int. Cl.: C08F 4/651, C08F 10/06

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMÉRISATION D'OLÉFINES

(30) Priority: 12.03.2015 EP 15158824
(43) Date of publication of application: 17.01.2018
(73) Proprietor: Basell Poliolefine Italia S.r.l., 20121 Milano (IT)
(72) Inventor: CHEVALIER, Reynald, F-60200 Compiegne (FR); MIGNOGNA, Alessandro, 44122 Ferrara (IT); MORINI, Giampiero, 44122 Ferrara (IT)
(74) Representative: Giberti, Stefano
(86) International application number: PCT/EP2016/054903
(87) International publication number: WO 2016/142377

(56) References cited:
- DE-A1- 19 927 979
- US-A1- 2012 157 642
- US-A1- 2013 131 293
- US-A1- 2014 011 670
- US-B1- 6 303 715

## Description

### FIELD OF THE INVENTION

The present disclosure relates to catalyst components for the polymerization of olefins, in particular propylene, comprising a Mg dihalide based support on which are supported Ti atoms and an electron donor compound containing a diolester derivative. The present disclosure further relates to the catalysts obtained from said components and to their use in processes for the polymerization of olefins in particular propylene.

### BACKGROUND OF THE INVENTION

Catalyst components for the stereospecific polymerization of olefins are disclosed in the art. Concerning the polymerization of propylene, Ziegler-Natta catalysts are used which, in general terms, comprises a solid catalyst component, constituted by a magnesium dihalide on which are supported a titanium compound and an internal electron donor compound, used in combination with an Al-alkyl compound. However, when a higher crystallinity of the polymer is desired, also an external donor (for example an alkoxysilane) is needed in order to obtain higher isotacticity. One of the classes of internal donors industrially used is constituted by the esters of phthalic acid, in particular diisobutylphthalate. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems.

Consequently, research activities have been devoted to discover alternative classes of internal donors for use in the preparation of catalyst components for propylene polymerization.

### SUMMARY OF THE INVENTION

Accordingly, the present disclosure provides a catalyst component for the polymerization of olefins comprising Mg, Ti, halogen and an electron donor of formula (I) 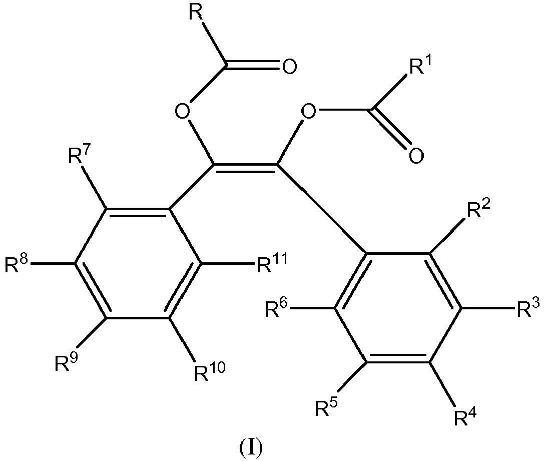 where R and R¹ are selected from C₁-C₂₀ hydrocarbon groups, C₆-C₁₄ aryl or alkylaryl groups hydrocarbon groups, optionally containing a heteroatom selected from halogen, P, S, N, O; R² to R¹¹ groups, equal to or different from each other, are hydrogen, halogen or C₁-C₁₅ hydrocarbon groups which can be optionally fused together to form one or more cycles with the proviso that R⁶ and R¹¹ cannot join together to form a phenyl ring.

### DETAILED DESCRIPTION OF THE INVENTION

Preferred structures of formula (I) are those in which R and R¹ groups are phenyl groups. Particularly preferred are phenyl groups bearing at least one substituent selected from C₁-C₁₅ hydrocarbon groups or halogen. Among hydrocarbon groups preferred substituents are C₁-C₁₀ alkyl groups, C₆-C₁₄ aryl groups, C₃-C₁₅ cycloalkyl groups, and C₇-C₁₅ arylalkyl or alkylaryl groups. More preferably, they can be C₁-C₁₀ alkyl groups and even more preferably linear C₁-C₅ alkyl groups. The hydrocarbon substituents are preferably located in 4-position.

Halogens are also preferred substituents, and among them Cl, Br and F are the preferred halogens. Cl being the most preferred. Preferred positions are meta and/or para. Also other positions in addition to meta and/or para could be substituted with halogens and/or hydrocarbon groups.

In a preferred embodiment, all the R² to R¹¹ groups, are hydrogen.
In another preferred embodiment, one or more of the R² to R¹¹ groups are selected from C₁-C₁₅ hydrocarbon groups which can be optionally fused together to form one or more cycles.

Preferably, the final amount of electron donor compound in the solid catalyst component ranges from 1 to 25% by weight preferably in the range from 3 to 20% by weight.

Examples of structures of formulas (I) are the following: 1,2-diphenylethene-1,2-diyl bis(2,2-dimethylpropanoate), 1,2-diphenylethene-1,2-diyl bis(4-butylbenzoate), 1,2-diphenylethene-1,2-diyl bis (4-chlorobenzoate), 1,2-diphenylethene-1,2-diyl bis(4-ethylbenzoate), 1,2-diphenylethene-1,2-diyl bis(4-methylbenzoate), 1,2-diphenylethene-1,2-diyl bis(4-propylbenzoate), 1,2-diphenylethene-1,2-diyl bis(furan-2-carboxylate), 1,2-diphenylethene-1,2-diyl bis(thiophene-2-carboxylate), 1,2-diphenylethene-1,2-diyl diacetate, 1,2-diphenylethene-1,2-diyl dibenzoate, 1,2-di-p-tolylethene-1,2-diyl bis(2,2-dimethylpropanoate), 1,2-di-p-tolylethene-1,2-diyl bis(4-butylbenzoate), 1,2-di-p-tolylethene-1,2-diyl bis(4-chlorobenzoate), 1,2-di-p-tolylethene-1,2-diyl bis(4-ethylbenzoate), 1,2-di-p-tolylethene-1,2-diyl bis(4-methylbenzoate), 1,2-di-p-tolylethene-1,2-diyl bis(4-propylbenzoate), 1,2-di-p-tolylethene-1,2-diyl bis(furan-2-carboxylate), 1,2-di-p-tolylethene-1,2-diyl bis(thiophene-2-carboxylate), 1,2-di-p-tolylethene-1,2-diyl diacetate, 1,2-di-p-tolylethene-1,2-diyl dibenzoate, 1,2-bis(4-chlorophenyl)ethene-1,2-diyl bis(2,2-dimethylpropanoate), 1,2-bis(4-chlorophenyl)ethene-1,2-diyl bis(4-butylbenzoate), 1,2-bis(4-chlorophenyl)ethene-1,2-diyl bis(4-chlorobenzoate), 1,2-bis(4-chlorophenyl)ethene-1,2-diyl bis(4-ethylbenzoate), 1,2-bis(4-chlorophenyl)ethene-1,2-diyl bis(4-methylbenzoate), 1,2-bis(4-chlorophenyl)ethene-1,2-diyl bis(4-propylbenzoate), 1,2-bis(4-chlorophenyl)ethene-1,2-diyl bis(furan-2-carboxylate), 1,2-bis(4-chlorophenyl)ethene-1,2-diyl bis(thiophene-2-carboxylate), 1,2-bis(4-chlorophenyl)ethene-1,2-diyl diacetate, 1,2-bis(4-chlorophenyl)ethene-1,2-diyl dibenzoate, 1,2-di-o-tolylethene-1,2-diyl bis(2,2-dimethylpropanoate), 1,2-di-o-tolylethene-1,2-diyl bis(4-butylbenzoate), 1,2-di-o-tolylethene-1,2-diyl bis(4-chlorobenzoate), 1,2-di-o-tolylethene-1,2-diyl bis(4-ethylbenzoate), 1,2-di-o-tolylethene-1,2-diyl bis(4-methylbenzoate), 1,2-di-o-tolylethene-1,2-diyl bis(4-propylbenzoate), 1,2-di-o-tolylethene-1,2-diyl bis(furan-2-carboxylate), 1,2-di-o-tolylethene-1,2-diyl bis(thiophene-2-carboxylate), 1,2-di-o-tolylethene-1,2-diyl diacetate, 1,2-di-o-tolylethene-1,2-diyl dibenzoate , 1,2-bis(2-chlorophenyl)ethene-1,2-diyl bis(2,2-dimethylpropanoate), 1,2-bis(2-chlorophenyl)ethene-1,2-diyl bis(4-butylbenzoate), 1,2-bis(2-chlorophenyl)ethene-1,2-diyl bis(4-chlorobenzoate), 1,2-bis(2-chlorophenyl)ethene-1,2-diyl bis(4-ethylbenzoate), 1,2-bis(2-chlorophenyl)ethene-1,2-diyl bis(4-methylbenzoate), 1,2-bis(2-chlorophenyl)ethene-1,2-diyl bis(4-propylbenzoate), 1,2-bis(2-chlorophenyl)ethene-1,2-diyl bis(furan-2-carboxylate), 1,2-bis(2-chlorophenyl)ethene-1,2-diyl bis(thiophene-2-carboxylate), 1,2-bis(2-chlorophenyl)ethene-1,2-diyl diacetate, 1,2-bis(2-chlorophenyl)ethene-1,2-diyl dibenzoate, 1,2-bis(2,6-dimethylphenyl)ethene-1,2-diyl bis(2,2-dimethylpropanoate), 1,2-bis(2,6-dimethylphenyl)ethene-1,2-diyl bis(4-butylbenzoate), 1,2-bis(2,6-dimethylphenyl)ethene-1,2-diyl bis(4-chlorobenzoate), 1,2-bis(2,6-dimethylphenyl)ethene-1,2-diyl bis(4-ethylbenzoate), 1,2-bis(2,6-dimethylphenyl)ethene-1,2-diyl bis(4-methylbenzoate), 1,2-bis(2,6-dimethylphenyl)ethene-1,2-diyl bis(4-propylbenzoate), 1,2-bis(2,6-dimethylphenyl)ethene-1,2-diyl bis(furan-2-carboxylate), 1,2-bis(2,6-dimethylphenyl)ethene-1,2-diyl bis(thiophene-2-carboxylate), 1,2-bis(2,6-dimethylphenyl)ethene-1,2-diyl diacetate, 1,2-bis(2,6-dimethylphenyl)ethene-1,2-diyl dibenzoate, 1,2-dimesitylethene-1,2-diyl bis(2,2-dimethylpropanoate), 1,2-dimesitylethene-1,2-diyl bis(4-butylbenzoate), 1,2-dimesitylethene-1,2-diyl bis(4-chlorobenzoate), 1,2-dimesitylethene-1,2-diyl bis(4-ethylbenzoate), 1,2-dimesitylethene-1,2-diyl bis(4-methylbenzoate), 1,2-dimesitylethene-1,2-diyl bis(4-propylbenzoate), 1,2-dimesitylethene-1,2-diyl bis(furan-2-carboxylate), 1,2-dimesitylethene-1,2-diyl bis(thiophene-2-carboxylate), 1,2-dimesitylethene-1,2-diyl diacetate, 1,2-dimesitylethene-1,2-diyl dibenzoate , 1,2-bis(4-fluorophenyl)ethene-1,2-diyl dibenzoate, 1,2-di(naphthalen-1-yl)ethene-1,2-diyl dibenzoate, 1,2-di(naphthalen-2-yl)ethene-1,2-diyl dibenzoate, 1,2-diphenylethene-1,2-diyl bis(1-naphthoate), 1,2-diphenylethene-1,2-diyl bis(2-naphthoate), 1-(2,6-dimethylphenyl)-2-phenylethene-1,2-diyl dibenzoate, 1-(2-chlorophenyl)-2-phenylethene-1,2-diyl dibenzoate, 1-mesityl-2-phenylethene-1,2-diyl dibenzoate, 1-phenyl-2-(o-tolyl)ethene-1,2-diyl dibenzoate, 1-phenyl-2-(p-tolyl)ethene-1,2-diyl dibenzoate, 1,2-bis(4-(tert-butyl)phenyl)ethene-1,2-diyl bis(2,2-dimethylpropanoate), 1,2-bis(4-(tert-butyl)phenyl)ethene-1,2-diyl bis(4-butylbenzoate), 1,2-bis(4-(tert-butyl)phenyl)ethene-1,2-diyl bis(4-chlorobenzoate), 1,2-bis(4-(tert-butyl)phenyl)ethene-1,2-diyl bis(4-ethylbenzoate), 1,2-bis(4-(tert-butyl)phenyl)ethene-1,2-diyl bis(4-methylbenzoate), 1,2-bis(4-(tert-butyl)phenyl)ethene-1,2-diyl bis(4-propylbenzoate), 1,2-bis(4-(tert-butyl)phenyl)ethene-1,2-diyl bis(furan-2-carboxylate), 1,2-bis(4-(tert-butyl)phenyl)ethene-1,2-diyl bis(thiophene-2-carboxylate), 1,2-bis(4-(tert-butyl)phenyl)ethene-1,2-diyl diacetate, 1,2-bis(4-(tert-butyl)phenyl)ethene-1,2-diyl dibenzoate.

The compounds falling in formula (I) can be prepared by reacting 1,2-diarylketone with metallic magnesium then with a proper acyl chloride.

In the solid catalyst component of the present disclosure the amount of Ti atoms in the solid catalyst component is preferably higher than 2.5%wt more preferably higher than 3.0% with respect to the total weight of said catalyst component.

As explained above, the catalyst components of the present disclosure comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å generally ranges from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of known chemical reactions.

Regardless of the preparation method used, the final amount of the electron donor compound of formula (I) is such that its molar ratio with respect to the Ti atoms is from 0.01 to 2, preferably from 0.05 to 1.5.

The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

External electron-donor compounds can be chosen among silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the present disclosure;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization temperature may range from 20 to 120°C, preferably of from 40 to 80°C. When the polymerization is carried out in gas-phase the operating pressure can range from 0.5 and 5 MPa, preferably between 1 and 4 MPa. In the bulk polymerization the operating pressure may range from 1 and 8 MPa, preferably between 1.5 and 5 MPa.

The following examples are given in order to further illustrate the disclosure.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

### General procedure for preparation of the spherical adducts

An initial amount of microspheroidal MgCl₂·2.8C₂H₅OH was prepared according to the method described in Example 2 of WO98/44009, but operating on larger scale.

### General procedure for the preparation of the solid catalyst component

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, dicyclopentyldimethoxysilane such as to have a Al/donor molar ratio of 20 and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Synthesis of donor of example 1

In a 250 mL round bottom flask, under nitrogen are introduced THF (50 mL), magnesium turnings (1.16 g, 47.6 mmol) and a catalytic amount of iodine. After 5 minutes benzil (10 g, 47.6 mmol) dissolved in THF (20 mL) is added dropwise in one hour under stirring and cooling. After two hours of post-reaction time benzoyl chloride (13.8 mL, 119 mmol) dissolved in THF (40 mL) is added dropwise under stirring and cooling. The mixture is stirred for addition two hours than is diluted with water and diethyl ether. The organic layer is separated and washed with water until neutral pH, then is anhydrified over Na2SO4 and the solvent is distilled off to afford 1,2-diphenylethene-1,2-diyl dibenzoate.

### Synthesis of donor of example 2

The procedure is the same as that used in the synthetic example 1 except that 3-chlorobenzoyl chloride is used instead of benzoyl chloride.

### Synthesis of donor of example 3

The procedure is the same as that used in the synthetic example 1 except that 4-n-propylbenzoyl chloride is used instead of benzoyl chloride.

### Examples 1-3

The catalyst components were prepared according to the general procedure using the donors indicated in Table 1. The so obtained solid catalyst components were analyzed for their composition, and were tested in polymerization of propylene, using the procedure described above. The results are listed in Table 1.

**Table 1**

| | **Catalyst compostion** | | | **Polymerization** | | |
|---|---|---|---|---|---|---|
| | **Internal Donor** | | **Ti** | **Mileage** | **XI** | **MIL** |
| | **Structure** | **% wt** | **%wt** | **kg/g** | **%wt** | **g/10'** |
| 1 | 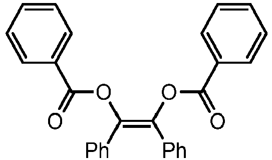 | 5.0 | 4.4 | 37.5 | 97.0 | 2.1 |
| 2 | 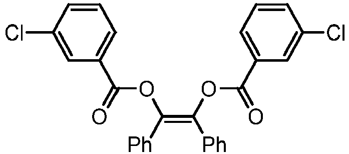 | nd | 4.3 | 48.7 | 98.0 | 1.1 |
| 3 | 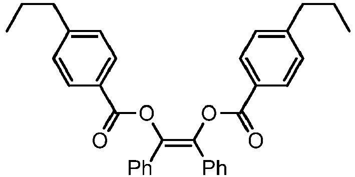 | nd | 4.8 | 58.7 | 96.1 | 2.3 |

| | | | | | | |
|---|---|---|---|---|---|---|
| nd: not determined | | | | | | |

## Claims

1. A solid catalyst component for the polymerization of olefins comprising Mg, Ti, halogen and an electron donor of formula (I) 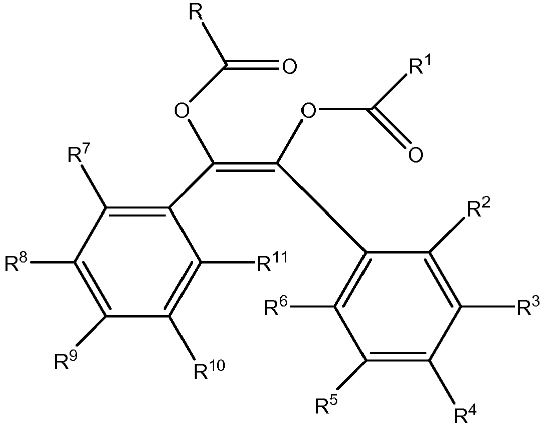 where R and R¹ are selected from C₁-C₂₀ hydrocarbon groups, C₆-C₁₄ aryl or alkylaryl groups hydrocarbon groups, optionally containing a heteroatom selected from halogen, P, S, N, O; R² to R¹¹ groups, equal to or different from each other, are hydrogen, halogen or C₁-C₁₅ hydrocarbon groups which can be optionally fused together to form one or more cycles with the proviso that R⁶ and R¹¹ cannot join together to form a phenyl ring.

2. The catalyst component according to claim 1 in which R and R¹ groups are phenyl groups.

3. The catalyst component according to claim 2 in which the phenyl groups bear at least one substituent selected from C₁-C₁₅ hydrocarbon groups or halogen.

4. The catalyst component according to claim 3 in which the hydrocarbon substituent is selected from C₁-C₁₀ alkyl groups, C₆-C₁₄ aryl groups, C₃-C₁₅ cycloalkyl groups, and C₇-C₁₅ arylalkyl or alkylaryl groups.

5. The catalyst component according to claim 4 in which the hydrocarbon substituent is selected from linear C₁-C₅ alkyl groups.

6. The catalyst component according to claim 4 or 5 in which the hydrocarbon substituent is located in 4-position.

7. The catalyst component according to claim 3 in which the halogen substituent is Cl.

8. The catalyst component according to claim 7 in which the Cl is located in meta and/or para.

9. The catalyst component according to claim 1 in which the R² to R¹¹ groups are hydrogen.

10. A catalyst for the polymerization of olefins comprising the product of the reaction between:
(i) the solid catalyst component according to any of the preceding claims and
(ii) an alkylaluminum compound and optionally,
(iii) an external electron donor compound.

11. The catalyst according to claim 10 further comprising an external electron donor compound.

12. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the claims 1-9;
ii. an alkylaluminum compound and,
iii. optionally an external donor compound.

## Patentansprüche

1. Feste Katalysatorkomponente für die Polymerisation von Olefinen, umfassend Mg, Ti, Halogen und einen Elektronendonor mit der Formel (I) 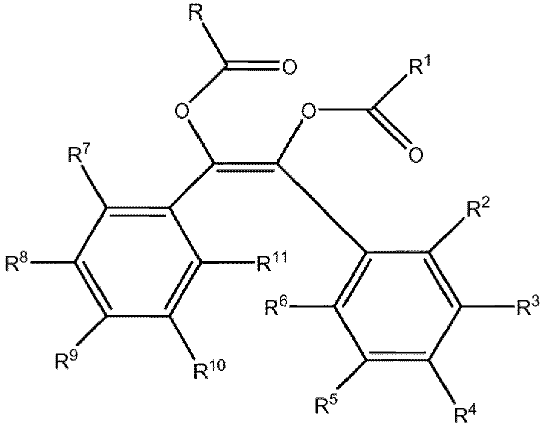
wobei R und R¹ ausgewählt sind aus C₁- bis C₂₀-Kohlenwasserstoffgruppen, C₆- bis C₁₄-Aryl- oder Alkylarylgruppen, Kohlenwasserstoffgruppen, die gegebenenfalls ein Heteroatom ausgewählt aus Halogen, P, S, N, O enthalten;
die Gruppen R² bis R¹¹, die gleich oder voneinander verschieden sind, Wasserstoff, Halogen oder C₁- bis C₁₅-Kohlenwasserstoffgruppen sind, die gegebenenfalls miteinander kondensiert sein können, um einen oder mehrere Cyclen zu bilden, mit der Maßgabe, dass R⁶ und R¹¹ nicht unter Bildung eines Phenylrings verbunden sein können.

2. Katalysatorkomponente nach Anspruch 1, wobei die Gruppen R und R¹ Phenylgruppen sind.

3. Katalysatorkomponente nach Anspruch 2, wobei die Phenylgruppen mindestens einen Substituenten tragen, der ausgewählt ist aus C₁- bis C₁₅-Kohlenwasserstoffgruppen oder Halogen.

4. Katalysatorkomponente nach Anspruch 3, wobei der Kohlenwasserstoffsubstituent ausgewählt ist aus C₁- bis C₁₀-Alkylgruppen, C₆- bis C₁₄-Arylgruppen, C₃- bis C₁₅-Cycloalkylgruppen und C₇- bis C₁₅-Arylalkyl- oder -Alkylarylgruppen.

5. Katalysatorkomponente nach Anspruch 4, wobei der Kohlenwasserstoffsubstituent ausgewählt ist aus linearen C₁- bis C₅-Alkylgruppen.

6. Katalysatorkomponente nach Anspruch 4 oder 5, wobei sich der Kohlenwasserstoffsubstituent in der 4-Position befindet.

7. Katalysatorkomponente nach Anspruch 3, wobei der Halogensubstituent Cl ist.

8. Katalysatorkomponente nach Anspruch 7, wobei sich das Cl in meta- und/oder para-Position befindet.

9. Katalysatorkomponente nach Anspruch 1, wobei die Gruppen R² bis R¹¹ Wasserstoff sind.

10. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung und gegebenenfalls
(iii) einer externen Elektronendonorverbindung.

11. Katalysator nach Anspruch 10, ferner umfassend eine externe Elektronendonorverbindung.

12. Verfahren zur (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems durchgeführt wird, welches das Produkt der Reaktion zwischen
i. der festen Katalysatorkomponente gemäß einem der Ansprüche 1 bis 9;
ii. einer Alkylaluminiumverbindung und
iii. gegebenenfalls einer externen Donorverbindung umfasst.

## Revendications

1. Composant de catalyseur solide pour la polymérisation d'oléfines comprenant Mg, Ti, halogène et un donneur d'électrons de formule (I) 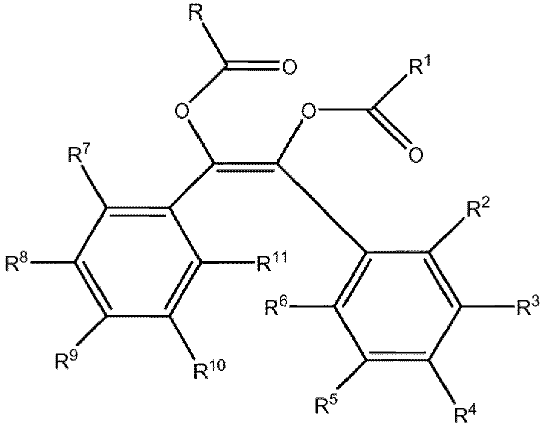 où
R et R¹ sont choisis parmi les groupes hydrocarbonés en C₁-C₂₀, les groupes aryle ou alkylaryle en C₆-C₁₄, des groupes hydrocarbonés contenant éventuellement un hétéroatome choisi parmi halogène, P, S, N et O ;
les groupes R² à R¹¹, identiques ou différents les uns des autres, représentent hydrogène, halogène ou des groupes hydrocarbonés en C₁-C₁₅ qui peuvent être éventuellement fusionnés conjointement pour former un ou plusieurs cycles, étant entendu que R⁶ et R¹¹ ne peuvent pas se joindre conjointement pour former un cycle phényle.

2. Composant de catalyseur selon la revendication 1, dans lequel les groupes R et R¹ représentent des groupes phényle.

3. Composant de catalyseur selon la revendication 2, dans lequel les groupes phényle portent au moins un substituant choisi parmi les groupes hydrocarbonés en C₁-C₁₅ ou halogène.

4. Composant de catalyseur selon la revendication 3, dans lequel le substituant hydrocarboné est choisi parmi les groupes alkyle en C₁-C₁₀, les groupes aryle en C₆-C₁₄, les groupes cycloalkyle en C₃-C₁₅ et les groupes arylalkyle ou alkylaryle en C₇-C₁₅.

5. Composant de catalyseur selon la revendication 4, dans lequel le substituant hydrocarboné est choisi parmi les groupes alkyle linéaires en C₁-C₅.

6. Composant de catalyseur selon la revendication 4 ou 5, dans lequel le substituant hydrocarboné est situé en position 4.

7. Composant de catalyseur selon la revendication 3, dans lequel le substituant halogène est Cl.

8. Composant de catalyseur selon la revendication 7, dans lequel Cl est situé en position méta et/ou para.

9. Composant de catalyseur selon la revendication 1, dans lequel les groupes de R²-R¹¹ représentent hydrogène.

10. Catalyseur pour la polymérisation d'oléfines comprenant le produit de la réaction entre :
(i) le composant de catalyseur solide selon l'une quelconque des revendications précédentes et
(ii) un composé de type alkylaluminium et, éventuellement,
(iii) un composé donneur d'électrons externe.

11. Catalyseur selon la revendication 10 comprenant, en outre, un composé donneur d'électrons externe.

12. Procédé pour la (co)polymérisation d'oléfines CH₂=CHR, dans lesquelles R représente hydrogène ou un radical hydrocarbyle comprenant 1-12 atomes de carbone, réalisé en présence d'un système catalyseur comprenant le produit de la réaction entre :
i. le composant de catalyseur solide selon l'une quelconque des revendications 1 à 9;
ii. un composé de type alkylaluminium et,
iii. éventuellement, un composé donneur d'électrons externe.
